# EUROPEAN PATENT SPECIFICATION

(11) **EP 3 416 278 B1**
(45) Date of publication and mention of the grant of the patent: **15.11.2023**
(21) Application number: 17750125.1
(22) Date of filing: 31.01.2017
(51) Int. Cl.: H02M 7/483, H02M 7/48

(54) **POWER CONVERSION DEVICE**
STROMWANDLUNGSVORRICHTUNG
DISPOSITIF DE CONVERSION DE COURANT

(30) Priority: 09.02.2016 JP 2016022354
(43) Date of publication of application: 19.12.2018
(73) Proprietor: Kabushiki Kaisha Toshiba, Minato-ku Tokyo 105-8001 (JP); Toshiba Energy Systems & Solutions Corporation, Saiwai-ku Kawasaki-shi Kanagawa 2120013 (JP)
(72) Inventor: ARAI, Takuro, Tokyo 105-8001 (JP); SUZUKI, Daichi, Tokyo 105-8001 (JP)
(74) Representative: AWA Sweden AB
(86) International application number: PCT/JP2017/003312
(87) International publication number: WO 2017/138400

(56) References cited:
- EP-A2- 2 566 033
- JP-A- 2009 065 809
- JP-A- 2012 044 839
- JP-A- 2012 044 839
- JP-A- 2013 027 221
- JP-A- 2013 027 221
- JP-A- 2014 050 192

## Description

### FIELD

The embodiment relates to a power conversion device that is placed between an AC circuit and a DC circuit, and mutually converts AC and DC.

### BACKGROUND

In view of a reduction of environmental load, a diversification of power supplies, etc., popularization of renewable energy, such as wind power generation and solar power generation, is advancing. Moreover, the scales of such power supplies are increasing, and for example, wind power generation on the ocean, solar power and solar thermal power generation in a desert region, etc., are now becoming in practice. The ocean site and the desert region are often geographically apart from a city site that is a power demand site, and a power transmission distance becomes long.

As for such a long distance power transmission, instead of an AC power transmission system that is generally applied, a high voltage DC (HVDC) power transmission may be applied in some cases. Application of the HVDC enables a construction of a system with low costs and less power transmission loss in comparison with conventional AC power transmission system when applied to the long distance power transmission.

When AC systems are connected with each other by the HVDC power transmission system, power conversion devices that mutually convert AC and DC are placed at the power transmitting end and at the power receiving end. As the power conversion device, although a separate excitation type converter that includes a thyristor as the semiconductor switch is popular, since the separate excitation type involves technical problems like an increase in installation area due to supplementary facilities, such as a phase modifying facility and a low-order harmonic filter, etc., the self excitation type is now getting attention, and in the self excitation type, a modular multilevel converter (MMC) that does not need an AC filter due to the capability of outputting a stepwise multilevel voltage waveform is highly expected.

The modular multilevel converter has unit converters each including a DC voltage source, such as a capacitor, connected in multistage, and is capable of converting a high voltage equivalent to power system and power distributing system voltages. The modular multilevel converter is capable of simplifying a transformer which is heavy and large and which has a relatively large cost in the entire system. The unit converter includes a switching element and a DC capacitor, and achieves multilevel output voltage and voltage waveform by shifting the ON and OFF timings of the switching element, making such a multilevel waveform close to a sine wave to achieve an advantage that eliminates the necessity of the harmonic filter.

According to such a circuit scheme that connects the unit converters in multistage, in order to control the voltage value of the DC capacitor of each unit converter to be constant, in principle, it is necessary to always flow a backflow current that flows back the DC current. However, such a backflow current must be prevented from flowing into the AC system side. A transformer is provided at the AC system side. The transformer is formed by winding a primary coil and a secondary coil around a core, and generates a voltage corresponding to the turn ratio by the mutual inductance of the primary coil and the secondary coil with the core being a magnetic circuit. When the DC component flows in this transformer, a so-called uneven magnetism that produces an uneven magnetization in one direction is caused in the core, possibly causing a magnetic saturation.

Accordingly, in the modular multilevel converter, in which the series of the unit converters at the positive-side DC line side is defined as a positive-side arm and the series of the unit converters at the negative-side DC line side is defined as a negative-side arm, a current sensor is provided at each of the positive-side arm and negative-side arm to achieve a balancing in the DC component flowing between the positive-side arm and the negative-side arm, controlling the DC component so as not to flow in the AC current path at the transformer side (see, for example, Patent Document 1). JP 2012-044839 A, EP 2566033 A2 and JP 2013-027221 A relate to power converters.

### CITATION LIST

### PATENT LITERATURES

Patent Document 1: JP 2014-82809 A

### SUMMARY

As for the current sensor, because of the characteristics thereof, a difference between the measured value and the actual value is occurred as a linear error that is proportional to the measured value. A control to achieve a balancing in the DC component flowing between the positive-side arm and the negative-side arm based on the measured value including the linear error is quite difficult, a DC offset current is inevitably occurred at the transformer side. Hence, according to conventional technologies, as a second best way, it is necessary to increase the size of the core in order to suppress the saturation of the transformer. However, the large-sizing of the core results in the increase in size of the power conversion device.

The embodiment has been made in order to address the above technical problems, and an objective is to provide a power conversion device that can easily suppress a DC component at a transformer side.

A power conversion device according to the appended independent claim 1 is provided.

### BRIEF DESCRIPTION OF DRAWINGS

FIG. 1 is a diagram illustrating a power conversion device according to a first embodiment;
FIG. 2 is a diagram illustrating a detailed structure of a unit converter;
FIG. 3 is a diagram illustrating a managing device of the power conversion device;
FIG. 4 is a control block diagram according to the managing device of the power conversion device;
FIG. 5 is a diagram illustrating a power conversion device according to a second embodiment; and
FIG. 6 is a diagram illustrating a power conversion device according to a third embodiment.

### DETAILED DESCRIPTION

### (First Embodiment)

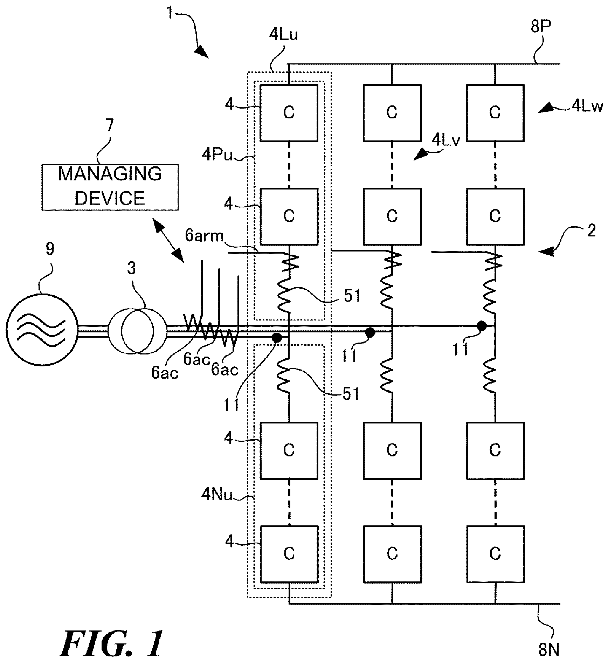

A power conversion device according to a first embodiment will be described with reference to drawings. As illustrated in FIG. 1, a power conversion device 1 is placed between a DC circuit that includes a positive-side DC line 8P and a negative-side DC line 8N, and an AC circuit 9. The DC circuit is a path which a DC voltage is applied to and which a DC current flows through, and is, for example, a circuit that is connected to a DC system and a battery in a power system. The AC circuit 9 is a path which an AC voltage is applied to and which an AC current flows through, and is, for example, a circuit that supplies power to an AC system and a motor in the power system. The power conversion device 1 includes a modular multilevel converter 2 (hereinafter, referred to as an MMC 2) that performs AC and DC conversions. Provided in the MMC 2 is a buffer reactor 51 that restricts a short-circuit current. Furthermore, the power conversion device 1 includes, as a control mechanism for the MMC 2, a control system including an arm current sensor 6arm, an AC current sensor 6ac, and a managing device 7.

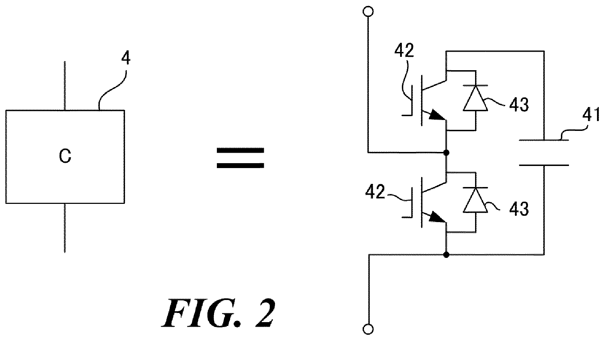

The MMC 2 includes a series of a plurality of multi unit converters 4. By shifting the switching timings of the respective unit converters 4, the MMC 2 outputs an arbitrarily voltage such as a stepwise AC voltage. As illustrated in FIG. 2, the unit converter 4 is, for example, a chopper cell. The unit converter 4 includes two switches 42 connected in series, and an energy accumulating element 41 connected in parallel with the two switches 42. The switch 42 includes a self-extinguishing switching element such as an IGBT, and a freewheeling diode 43 connected in reverse parallel with the switching element. As for the self extinguishing switching element, switching elements that can be controlled to turn ON and OFF, such as a GTO, a GCT, a MOSFET, and an IGBT, are applicable. The energy accumulating element 41 is, for example, a capacitor. Note that the unit converter 4 may be an H-bridge cell.

In this embodiment, the AC circuit 9 is a three-phase AC system, and as illustrated in FIG. 1, the plurality of the unit converters 4 are connected in series between the positive-side DC line 8P and the negative-side DC line 8N for each of the U-phase, the V-phase and the W-phase. The sequences of the unit converters 4 between the positive-side DC line 8P and the negative-side DC line 8N will be referred to as legs 4Lu, 4Lv, and 4Lw. The legs 4Lu, 4Lv, and 4Lw in the respective phases are connected in parallel between the positive-side DC line 8P and the negative-side DC line 8N.

Since the legs 4Lu, 4Lv and 4Lw in the respective phases employ the same structure, the leg 4Lu in the U-phase will be described below as a representative. The leg 4Lu is divided into a positive-side arm 4Pu and a negative-side arm 4Nu. The positive-side arm 4Pu has one end connected to the positive-side DC line 8P, the negative-side arm 4Nu has one end connected to the negative-side DC line 8N, and the positive-side arm 4Pu and the negative-side arm 4Nu are connected with each other via respective other ends. The end portion connected to the positive-side DC line 8P and the negative-side DC line 8N is a DC terminal, and the connection point between the positive-side arm 4Pu and the negative-side arm 4Nu is an AC terminal 11. The AC terminal 11 is an interface with the AC circuit 9, and is ideally an AC current path which only the AC component flows through.

The buffer reactors 51 is provided to each of the positive-side arm 4Pu and the negative-side arm 4Nu. The buffer reactor 51 of the positive-side arm 4Pu is connected in series between the AC terminal 11 and the positive-side arm 4Pu. The buffer reactor 51 of the negative-side arm 4Nu is connected in series between the AC terminal 11 and the negative-side arm 4Nu.

A transformer 3 is installed between this power conversion device 1 and the AC circuit 9. The transformer 3 is connected to the MMC 2 via the AC terminal 11 in each phase. The transformer 3 is formed by winding a primary coil and a secondary coil around a core, and generates a voltage corresponding to the turn ratio by the mutual inductance of the primary coil and the secondary coil with the core being a magnetic circuit.

The AC current sensor 6ac is installed at the AC terminal 11 that is an AC current path extended from the connection point of the positive-side arm 4Pu and the negative-side arm 4Nu. The arm current sensor 6arm is installed either at the positive-side arm 4Pu or the negative-side arm 4Nu. In the case of a three-phase AC, a total of six current sensors are installed. In this embodiment, an example case in which the current sensor is installed at the positive-side arm 4Pu will be described.

The managing device 7 is a computer which calculates the voltage to be output to the MMC 2 with various measured values of the AC current sensor 6ac and arm current sensor 6arm, etc., as parameters, and controls each unit converter 4 to turn ON and OFF in accordance with a calculated result. The computer is built with an ASIC, an FPGA or a CPU, and the arithmetic processing control by the managing device 7 is achieved by the software processing of the computer, etc.

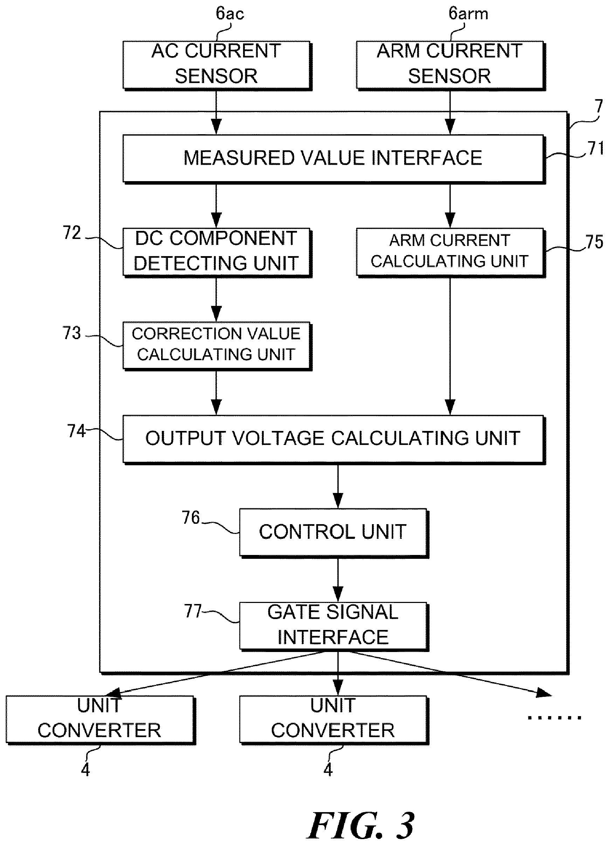

As illustrated in FIG. 3, this managing device 7 includes a measured value interface 71, a DC component detecting unit 72, a correction voltage calculating unit 73, an output voltage calculating unit 74, an arm current calculating unit 75, a control unit 76 that turns ON and OFF the unit converter 4, and a gate signal interface 77. The measured value interface 71 is connected to the AC current sensor 6ac and the arm current sensor 6arm via signal lines, and receives the measured values of the current of the AC terminal 11 and of the positive-side arm 4Pu. The gate signal interface 77 transmits a gate signal to the unit converter 4 in accordance with the control unit 76.

The DC component detecting unit 72 detects the DC component flowing through the AC terminal 11. This DC component detecting unit 72 calculates a moving average from the measured values of the AC current sensor 6ac. Alternatively, the DC component detecting unit 72 may perform filtering process that eliminates the AC component by a low pass filter, etc., to which a cut-off frequency is set. Since the AC component is eliminated by the moving average or filtering, the DC component detecting unit 72 acquires only the value of the DC component from the measured value by the AC current sensor 6ac. The correction voltage calculating unit 73 calculates the correction voltage that causes the DC component detected by the DC component detecting unit 72 to be zero by a PID control, etc. The correction voltage is a component of the output voltage of the MMC 2, and is a voltage that causes only the AC current to flow through the AC terminal 11, and causes the DC current of the AC terminal 11 to be zero.

The arm current calculating unit 75 calculates the arm current of the negative-side arm 4Nu at which no arm current sensor 6arm is installed. A current value In of the negative-side arm 4Nu is a result of subtracting a current value Iac of the AC current sensor 6ac from a current value Iarm of the arm current sensor 6arm provided at the positive-side arm 4Pu is. The arm current calculating unit 75 calculates In = Iarm - Iac.

The output voltage calculating unit 74 calculates the output voltage to be output by the MMC 2 in consideration of a correction voltage, an AC control voltage, a DC control voltage, and a balance control voltage. The correction voltage is acquired from the calculation result of the correction voltage calculating unit 73. The AC control voltage is for controlling the AC current flowing through the leg 4Lu, and is calculated by the output voltage calculating unit 74. The DC control voltage is for controlling the DC current flowing through the leg 4Lu, and is calculated by the output voltage calculating unit 74. The balance control voltage is for controlling the balance among the energy accumulating elements 41 of the respective unit converters 4, and is calculated by the output voltage calculating unit 74.

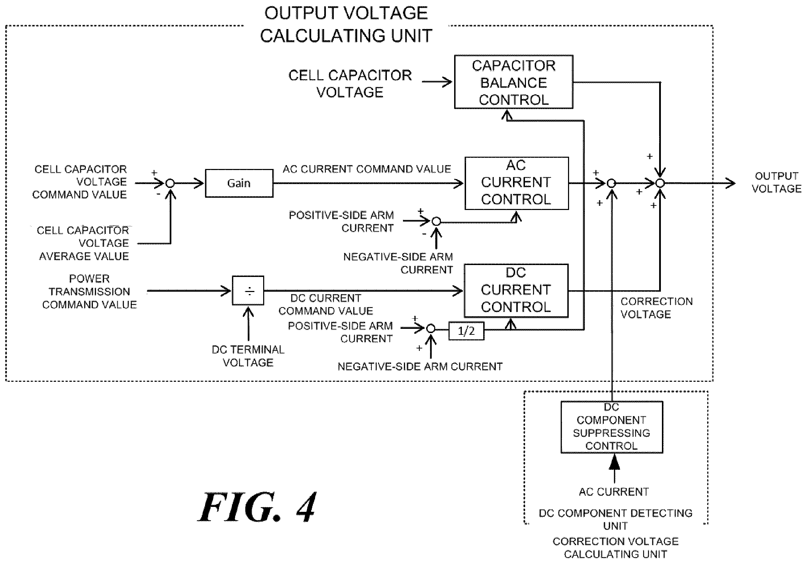

FIG. 4 illustrates a control block that indicates the calculation by the output voltage calculating unit 74. This control block involves the calculation of the correction voltage by the DC component detecting unit 72 and the correction voltage calculating unit 73. In the calculation of the AC control voltage, first, a voltage average value is calculated from all of the unit converters 4 of the power conversion device 1, an error signal is calculated by subtracting this voltage average value from the voltage command value of the unit converter 4, and an AC current command value that causes the error signal to be zero is calculated by a PID control, etc. Moreover, an AC current value is calculated by subtracting the current of the negative-side arm 4Nu from the current of the positive-side arm 4Pu. The current value of the negative-side arm 4Nu is input from the arm current calculating unit 75. This AC current value may be substituted by the measured value of the AC current sensor 6ac. Accordingly, the AC control voltage that is to be an operation quantity by the PID control, etc., is calculated with the AC current value being an output value and the AC current command value being a target value.

As for the DC control voltage, first, a DC current command value is calculated by dividing the voltage of the DC terminal from a power transmission command value, an average current value of the positive-side arm 4Pu and the negative-side arm 4Nu is calculated, and the DC control voltage that is to be an operation quantity by the PID control, etc., is calculated with the average current value being an output value and the DC current command value being a target value. The current value of the negative-side arm 4Nu is input from the arm current calculating unit 75. The power transmission command value is output by, for example, a central command station.

As for the balance control voltage, first, the average current value of the positive-side arm 4Pu and the negative-side arm 4Nu is calculated, and the balance control voltage for equalizing the voltages of the respective unit converters 4 by the PID control, etc., is calculated from this average current value and the voltage of the unit converter 4. The current value of the negative-side arm 4Nu is input from the arm current calculating unit 75.

Finally, the output voltage calculating unit 74 calculates the output voltage by adding the correction voltage, the AC control voltage, the DC control voltage, and the balance control voltage, and outputs the calculation result to the control unit 76. The control unit 76 determines the turn ON and OFF of each unit converter 4 using the value of the output voltage input from the output voltage calculating unit 74, and outputs the gate signal to the corresponding unit converter 4 via the gate signal interface 77.

According to this power conversion device 1, the AC current sensor 6ac directly detects the current of the AC terminal 11, and the DC component of this current is controlled to be zero. The measured value of the current sensor contains, due to the characteristics thereof, a linear error component proportional to measured value. The scheme of causing the DC component of the AC terminal 11 to be zero by taking, as the measured value, the backflow current which flows through the positive-side arm 4Pu and the negative-side arm 4Nu and which cannot be zero, and by making such a measured value to be a predetermined value other than zero always needs to take the linear error component into consideration, re a quite high-level control. In contrast, according to this power conversion device 1, the closer the DC component becomes to zero, the smaller the linear error component contained in the measured value becomes, and thus the control of making the DC component to become close to zero is facilitated.

As described above, according to this power conversion device 1, to the AC current path extended from the connection point between the positive-side arm 4Pu and the negative-side arm 4Nu, the AC current sensor 6ac that detects the current of the AC current path is installed, and the unit converter 4 is controlled so as to suppress the DC component of this AC current path based on the measured value of the AC current sensor 6ac. In this embodiment, the two buffer reactors 51 are connected in series between the positive-side arm 4Pu and the negative-side arm 4Nu, and the AC current path is the AC terminal 11 extended from between the two buffer reactors 51 to the AC circuit 9, and the AC current sensor 6ac is provided at the AC terminal 11, and detects the current of the AC terminal 11.

Accordingly, the DC component can be precisely eliminated from the current of the AC current path without an adverse effect of the characteristics of the linear error of the current sensor, and the transformer 3 may not be unevenly magnetized. Hence, according to this power conversion device 1, the necessity of increasing the size of the transformer 3 in order to address the uneven magnetization can be reduced.

Moreover, the arm current sensor 6arm is provided at either the positive-side arm 4Pu or the negative-side arm 4Nu, and by subtracting the measured value of the AC current sensor 6ac from the measured value of the arm current sensor 6arm, the arm current sensor 6arm calculates the arm current of the other arm at which no arm current sensor is installed. This enables a detection of the respective currents of the AC current path, the positive-side arm 4Pu and the negative-side arm 4Nu without increasing the number of current sensors, suppressing an increase in costs of the power conversion device 1.

### (Second Embodiment)

A power conversion device according to a second embodiment will be described with reference to drawings. The same structure and the same function as those of the first embodiment will be denoted by the same reference numerals, and the detailed description thereof will be omitted.

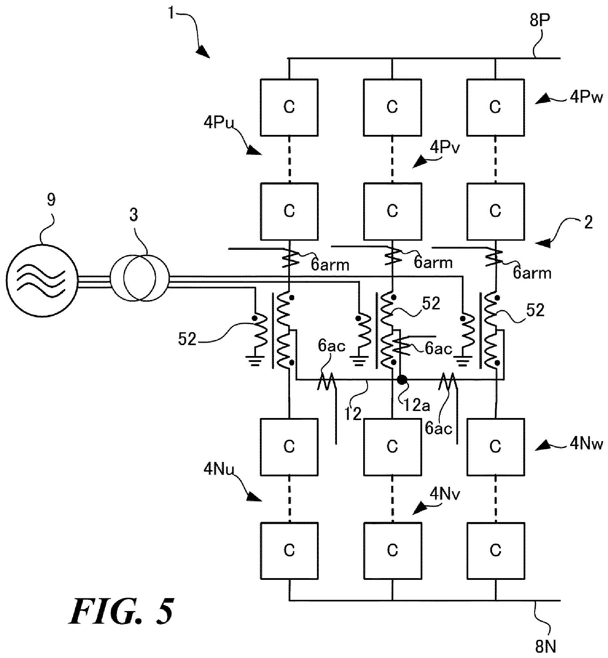

The power conversion device 1 illustrated in FIG. 5 includes three-winding transformers 52 in the MMC 2 instead of the buffer reactor 51. The three-winding transformers 52 in the U-phase, the V-phase, and the W-phase are connected by a star connection. The three-winding transformer 52 includes an AC-circuit side winding connected to the AC circuit 9, and a first DC-circuit side winding and a second DC-circuit side winding connected in series between the positive-side arm 4Pu and the negative-side arm 4Nu. The first DC-circuit side winding and the second DC-circuit side winding have the same number of turns of winding, and have the respective negative terminals connected with each other to have opposite polarities. A neutral line 12 is provided between the first DC-circuit side winding and the second DC-circuit side winding to connect the three-winding transformers 52 in the U-phase, the V-phase, and the W-phase with each other.

Since the first DC-circuit side winding and the second DC-circuit side winding have the same number of turns of winding and the opposite polarities, the first DC-circuit side winding and the second DC-circuit side winding generate DC magnetic fluxes in the directions opposite to each other, and cancel DC electromotive forces with each other in the same phase. Hence, the neutral line 12 is ideally an AC current path which only the AC component flows through. The AC current sensor 6ac in each phase is provided at this neutral line 12. The AC current sensor 6ac in the U-phase is provided between the three-winding transformer 52 in the U-phase and a neutral point 12a, the AC current sensor 6ac in the V-phase is provided between the three-winding transformer 52 in the V-phase and the neutral point 12a, and the AC current sensor 6ac in the W-phase is provided between the three-winding transformer 52 in the W-phase and the neutral point 12a.

The managing device 7 controls the output voltage of the MMC 2 so as to cause the DC component at the neutral line 12 to be zero. That is, like the first embodiment, the DC component detecting unit 72 detects the DC component from the measured value of the AC current sensor 6ac on the neutral line 12, the correction voltage calculating unit 73 calculates the correction voltage that causes the detected DC component at the neutral line 12 to be zero, the output voltage calculating unit 74 calculates the output voltage to which this correction voltage is added, and the control unit 76 turns ON and OFF the unit converter 4 so as to achieve the output voltage. In the calculation of the output voltage, the arm current calculating unit 75 calculates the current of the negative-side arm 4Nu by subtracting the current of the neutral line 12 from the current value of the positive-side arm 4Pu, and applies the calculated value of the current of the negative-side arm 4Nu as the parameter.

As described above, when the power conversion device 1 has the three-winding transformers 52 in the star connection, the AC current path extended from the connection point of the positive-side arm 4Pu and the negative-side arm 4Nu is the neutral line 12, and the DC component can be prevented from flowing in the transformer 3 by providing the AC current sensor 6ac at this neutral line 12. That is, since the DC component can be precisely eliminated from the current of the AC current path without being affected by the characteristics of linear error of the current sensor, the transformer 3 is not likely to be unevenly magnetized. According to this power conversion device 1, the necessity of increasing the size of the transformer 3 in order to address the uneven magnetization can be reduced.

### (Third Embodiment)

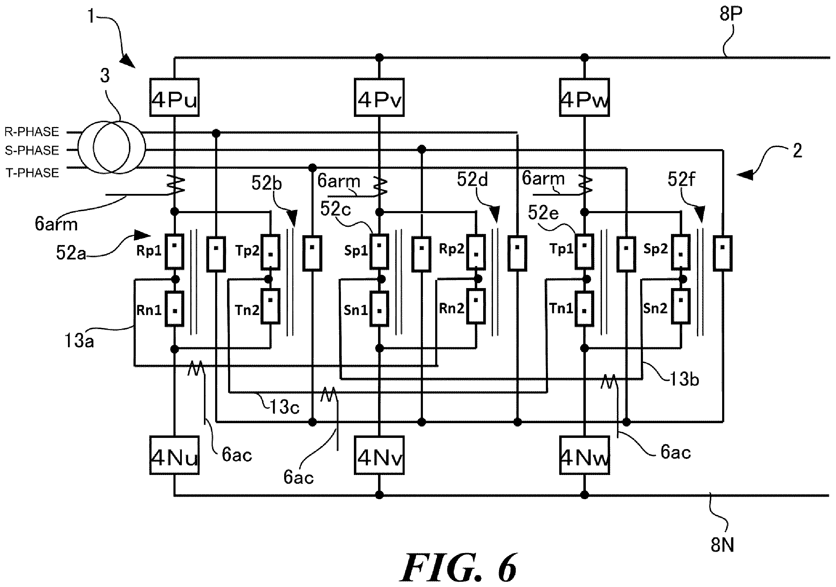

A power conversion device 1 according to a third embodiment will be described with reference to drawings. The same structure and the same function as those of the first or second embodiment will be denoted by the same reference numeral, and the detailed description thereof will be omitted. The power conversion device 1 illustrated in FIG. 6 includes the three-winding transformers 52 in the MMC 2 instead of the buffer reactors 51. The three-winding transformers 52 in the U-phase, the V-phase, and the W-phase are connected by delta connection.

An R-phase first three-winding transformer 52a connected to the R-phase of the AC circuit 9 and a T-phase second three-winding transformer 52b connected to the T-phase are connected between the positive-side arm 4Pu and the negative-side arm 4Nu in the U-phase. The R-phase first three-winding transformer 52a and the T-phase second three-winding transformer 52b are connected in parallel with each other.

An S-phase first three-winding transformer 52c connected to the S-phase of the AC circuit 9 and an R-phase second three-winding transformer 52d connected to the R-phase are connected between the positive-side arm 4Pv and the negative-side arm 4Nv in the V-phase. The S-phase first three-winding transformer 52c and the R-phase second three-winding transformer 52d are connected in parallel with each other.

A T-phase first three-winding transformer 52e connected to the T-phase of the AC circuit 9 and an S-phase second three-winding transformer 52f connected to the S-phase are connected between the positive-side arm 4Pw and the negative-side arm 4Nw in the W-phase. The T-phase first three-winding transformer 52e and the S-phase second three-winding transformer 52f are connected in parallel with each other.

Moreover, the negative sides of the AC-circuit side windings of the respective second DC-circuit side winding transformers 52a to 52f are connected together. Between the first DC-circuit side winding and the second DC-circuit side winding of the R-phase first three-winding transformer 52a , and between the first DC-circuit side winding and the second DC-circuit side winding of the R-phase second three-winding transformer 52d are connected by a first connection 13a. The first DC-circuit side winding and the second DC-circuit side winding of the R-phase first three-winding transformer 52a are connected by respective negative terminals and cancel DC electromotive force with each other. In addition, the first DC-circuit side winding and the second DC-circuit side winding of the R-phase second three-winding transformer 52d are connected by respective positive terminals and cancel DC electromotive force with each other. Hence, the first connection 13a is ideally an AC current path through which only the AC component flows. The AC current sensor 6ac in the R-phase is provided at the first connection 13a.

Bet the first DC-circuit side winding and the second DC-circuit side winding of the S-phase first three-winding transformer 52c, and between the first DC-circuit side winding the second DC-circuit side winding of the S-phase second three-winding transformer 52f are connected by a second connection 13b. The first DC-circuit side winding the second DC-circuit side winding of the S-phase first three-winding transformer 52c and are connected by respective negative terminals and cancel DC electromotive force with each other. The first DC-circuit side winding the second DC-circuit side winding of the S-phase second three-winding transformer 52f and are connected by respective positive terminals and cancel DC electromotive force with each other. Hence, the second connection 13b is ideally an AC current path through which only the AC component flows. The AC current sensor 6ac in the S-phase is provided at the second connection 13b.

Between the first DC-circuit side winding the second DC-circuit side winding of the T-phase first three-winding transformer 52e, and between the first DC-circuit side winding and the second DC-circuit side winding of the T-phase second three-winding transformer 52b are connected by a third connection 13c. The first DC-circuit side winding and the second DC-circuit side winding of the T-phase first three-winding transformer 52e are connected by respective negative terminals and cancel DC electromotive force with each other. The first DC-circuit side winding and the second DC-circuit side winding of the T-phase second three-winding transformer 52b are connected by respective positive terminals and cancel DC electromotive force with each other. Hence, the third connection 13c is ideally an AC current path through which only the AC component flows. The AC current sensor 6ac in the T-phase is provided at the third connection 13c.

The managing device 7 controls the output voltage of the MMC 2 to cause the DC components of the first connection 13a to the third connection 13c to be zero. That is, like the first embodiment, the DC component detecting unit 72 detects the DC components from the measured values of the AC current sensors 6ac on the first connection 13a to the third connection 13c, the correction voltage calculating unit 73 calculates the correction voltage that causes the detected DC components of the first connection 13a to the third connection 13c to be zero, the output voltage calculating unit 74 calculates the output voltage to which this correction voltage is added, and the control unit 76 turns ON and OFF the unit converter 4 to achieve the output voltage. In the calculation of the output voltage, the arm current calculating unit 75 calculates the currents of the negative-side arms 4Nu, 4Nv, and 4Nw by subtracting the currents of the first connection 13a to the third connection 13c from the respective current values of the positive-side arms 4Pu, 4Pv, and 4Pw, and applies the calculated values of the currents of the negative-side arm 4Nu, 4Nv, and 4Nw as the parameters.

As described above, when the power conversion device 1 includes the three-winding transformers 52 connected in delta connection, the AC current path extended from the connection point of the positive-side arm 4Pu and the negative-side arm 4Nu is the connection 13, and by providing the AC current sensor 6ac at this connection 13, the DC component can be prevented from flowing in the transformer 3. That is, since the DC component can be precisely eliminated from the current of the AC current path without being affected by the characteristics of linear error of the current sensor, the transformer 3 is not likely to be unevenly magnetized. According to this power conversion device 1, the necessity of increasing the size of the transformer 3 in order to address the uneven magnetization can be reduced.

### (Other Embodiments)

While certain embodiments have been described, these embodiments have been presented by way of example only, and are not intended to limit the scope of the invention which is determined by the appended set of claims.

### REFERENCE SIGNS LIST

- 1: Power conversion device
- 2: Modular multilevel converter
- 3: Transformer
- 4: Unit converter
- 41: Energy accumulating element
- 42: Switch
- 43: Diode
- 4Lu, 4Lv, and 4Lw: Leg
- 4Pu: Positive-side arm
- 4Nu: Negative-side arm
- 51: Buffer reactor
- 52: Three-winding transformer
- 6arm: Arm current sensor
- 6ac: AC current sensor
- 7: Managing device
- 71: Measured value interface
- 72: DC component detecting unit
- 73: Correction voltage calculating unit
- 74: Output voltage calculating unit
- 75: Arm current calculating unit
- 76: Control unit
- 77: Gate signal interface
- 8P: Positive-side DC line
- 8N: Negative-side DC line
- 9: AC circuit
- 11: AC terminal
- 12: Neutral line
- 13: wiring

## Claims

1. A power conversion device (1) provided between a DC circuit and an AC circuit (9), the DC circuit comprising a positive-side DC line (8P) and a negative-side DC line (8N), and the power conversion device comprising:
a positive-side arm (4Pu) and a negative-side arm (4Nu) each comprising a plurality of unit converters connected in series, the positive-side arm and the negative-side arm being connected in series between the positive-side DC line (8P) and the negative-side DC line (8N);
each unit converter (4) of the plurality of unit converters of both the positive-side arm and the negative-side arm including a switching element (42) connected between an input and an output of said unit converter and an energy accumulating element (41) coupled between the input and output of said unit converter (4),
an AC current path extended from a connection point of the positive-side arm and the negative-side arm;
an arm current sensor (6arm) provided only in one arm of the positive-side arm or the negative-side arm, and configured to detect a current of the said one arm; and
an AC current sensor (6ac) provided on the AC current path and configured to detect a current of the AC current path;
the power conversion device further comprising a managing unit configured to control the plurality of unit converters of both the positive-side arm (4Pu) and negative-side arm (4Nu) so as to suppress a DC component in the AC current path based on a measured value of the current detected by the AC current sensor,
wherein the managing unit (7) comprises:
a measured value interface (71) connected to the AC current sensor (6ac) and the arm current sensor (6arm) via signal lines, and configured to receive the measured value of the current detected by the AC current sensor (6ac) and a measured value of the current detected by the arm current sensor (6arm);
a detecting unit (72) configured to detect a DC component from the measured value of the AC current sensor;
a calculating unit (73) configured to calculate a correction voltage that causes the DC component to be zero;
an arm current calculating unit (75) configured to calculate a current of the other arm of the positive-side arm or the negative side arm in which no arm current sensor is installed by subtracting the measured value of the AC current sensor from the measured value of the arm current sensor;
an output voltage calculating unit (74) configured to calculate an output voltage by adding the correction voltage, an AC control voltage, a DC control voltage, and a balance control voltage,
wherein the AC control voltage is configured to control an AC current flowing through a leg (4Lu) comprising the positive-side arm (4Pu) and the negative-side arm (4Nu), being calculated by the output voltage calculating unit (74) based on a subtraction of the calculated value of the current of the other arm from the measured value of the current of the AC current sensor (6ac),
wherein the DC control voltage is configured to control a DC current flowing through the leg (4Lu), being calculated by the output voltage calculating unit (74) based on an average value of the calculated value of the current of the other arm and the measured value of the current of the AC current sensor
wherein the balance control voltage is configured to control a balance among the energy accumulating elements (41) of the plurality of unit converters (4) of both the positive-side arm (4Pu) and negative-side arm (4Nu), being calculated by the output voltage calculating unit (74) based on an average value of the calculated value of the current of the other arm and the measured value of the current of the AC current sensor, and
a control unit (76) configured to determine the turn ON and OFF of each unit converter of the plurality of unit converters of both the positive-side arm (4Pu) and negative-side arm (4Nu) based on the output voltage and output a gate signal to each unit converter of the plurality of unit converters (4) of both the positive-side arm (4Pu) and negative-side arm (4Nu), and
a gate signal interface (77) configured to transmit the gate signal to each unit converter of the plurality of unit converters (4) of both the positive-side arm (4Pu) and negative-side arm (4Nu) in accordance with the control unit (76) .

2. The power conversion device (1) according to claim 1, wherein:
respective buffer reactors (51) of the positive-side arm and the negative-side arm are connected in series between the positive-side arm and the negative-side arm;
the AC current path comprises an AC terminal (11) and extends to the AC circuit (9) from between the respective buffer reactors; and
the AC current sensor is provided at the AC terminal, and is configured to detect a current through the AC terminal.

3. The power conversion device (1) according to claim 1, wherein the AC circuit is configured to generate three phases and the power conversion device further comprises a three-winding transformer (52) for each phase, the three-winding transformers (52) of the three phases being connected in a star connection, wherein the power conversion device comprises for each phase a respective positive-side arm and negative-side arm, wherein each of the three-winding transformers (52) comprises:
an AC-circuit side winding connected to the AC circuit;
a first DC-circuit side winding and a second DC-circuit side winding connected in series between the respective positive-side arm and negative-side arm; and
a neutral line (12) extended from between the first DC-circuit side winding and the second DC-circuit side winding to a second end; and
wherein the second ends of the neutral lines of the three-winding transformers (52) of the three phases are connected with each other,
the AC current path is the neutral line of the three-winding transformer of the first phase, and
the AC current sensor is provided at the neutral line and is configured to detect a current of the neutral line.

4. The power conversion device (1) according to claim 1, wherein the AC circuit is configured to generate three phases and the power conversion device further comprises a pair of three-winding transformers (52a, 52d; 52c, 52f; 52e, 52b) for each phase, the three-winding transformers (52a, 52b, 52c, 52d, 52e, 52f) of the three phases being connected in a delta connection, wherein the power conversion device comprises for each phase a respective positive-side arm and negative-side arm, wherein each pair of three-winding transformers comprises:
two AC-circuit side windings connected to a respective one of the phases of the AC circuit and in parallel with each other;
two sets of first DC-circuit side winding and second DC-circuit side winding each connected in series between a respective different positive-side arm and negative-side arm, and corresponding to the two AC circuit-side windings; and
wherein the AC current path (13a) connects the connection point of the first DC-circuit side winding and the second DC-circuit side winding of the two sets of the pair of three-winding transformers (52a, 52d) of the first phase.

5. The power conversion device (1) according to any one of claims 1 to 4, wherein the AC circuit (9) is coupled to the power conversion device (1) by means of a transformer (3).

## Patentansprüche

1. Stromwandlungsvorrichtung (1), die zwischen einer Gleichstromschaltung und einer Wechselstromschaltung (9) bereitgestellt ist, wobei die Gleichstromschaltung eine Gleichstromleitung (8P) auf der positiven Seite und eine Gleichstromleitung (8N) auf der negativen Seite umfasst und die Stromwandlungsvorrichtung Folgendes umfasst:
einen Arm (4Pu) auf der positiven Seite und einen Arm (4Nu) auf der negativen Seite, die jeweils mehrere Einheitswandler umfassen, die in Reihe geschaltet sind, wobei der Arm auf der positiven Seite und der Arm auf der negativen Seite zwischen der Gleichstromleitung (8P) auf der positiven Seite und der Gleichstromleitung (8N) auf der negativen Seite in Reihe geschaltet sind;
wobei jeder Einheitswandler (4) von den mehreren Einheitswandlern von sowohl dem Arm auf der positiven Seite als auch dem Arm auf der negativen Seite ein Schaltelement (42) umfasst, das zwischen einem Eingang und einem Ausgang des Einheitswandlers und einem Energieakkumulationselement (41) verbunden ist, das zwischen dem Eingang und Ausgang des Einheitswandlers (4) gekoppelt ist,
eine Wechselstrombahn, die sich von einem Verbindungspunkt des Arms auf der positiven Seite und des Arms auf der negativen Seite erstreckt;
einen Armstromsensor (6arm), der nur in einem Arm von dem Arm auf der positiven Seite oder dem Arm auf der negativen Seite bereitgestellt ist und dazu ausgestaltet ist, einen Strom des einen Arms zu detektieren; und
einen Wechselstromsensor (6ac), der auf der Wechselstrombahn bereitgestellt ist und dazu ausgestaltet ist, einen Strom der Wechselstrombahn zu detektieren;
wobei die Stromwandlungsvorrichtung ferner eine Verwaltungseinheit umfasst, die dazu ausgestaltet ist, die mehreren Einheitswandler von sowohl dem Arm (4Pu) auf der positiven Seite als auch dem Arm (4Nu) auf der negativen Seite zu steuern, um eine Gleichstromkomponente in der Wechselstrombahn basierend auf einem Messwert des durch den Wechselstromsensor detektierten Stroms zu unterdrücken,
wobei die Verwaltungseinheit (7) Folgendes umfasst:
eine Messwertschnittstelle (71), die mit dem Wechselstromsensor (6ac) und dem Armstromsensor (6arm) über Signalleitungen verbunden ist und dazu ausgestaltet ist, den Messwert des durch den Wechselstromsensor (6ac) detektierten Stroms und einen Messwert des durch den Armstromsensor (6arm) detektierten Stroms zu empfangen;
eine Detektionseinheit (72), die dazu ausgestaltet ist, eine Gleichstromkomponente von dem Messwert des Wechselstromsensors zu detektieren;
eine Berechnungseinheit (73), die dazu ausgestaltet ist, eine Korrekturspannung zu berechnen, die bewirkt, dass die Gleichstromkomponente null ist;
eine Armstrom-Berechnungseinheit (75), die dazu ausgestaltet ist, einen Strom des anderen Arms von dem Arm auf der positiven Seite oder dem Arm auf der negativen Seite, in dem kein Armstromsensor eingerichtet ist, durch Subtrahieren des Messwerts des Wechselstromsensors von dem Messwert des Armstromsensors zu berechnen;
eine Ausgangsspannungsberechnungseinheit (74), die dazu ausgestaltet ist, eine Ausgangsspannung durch Addieren der Korrekturspannung, einer Wechselstrom-Steuerspannung, einer Gleichstrom-Steuerspannung und einer Ausgleichssteuerspannung zu berechnen,
wobei die Wechselstrom-Steuerspannung dazu ausgestaltet ist, einen Wechselstrom zu steuern, der durch einen Zweig (4Lu) fließt, der den Arm (4Pu) auf der positiven Seite und den Arm (4Nu) auf der negativen Seite umfasst, der durch die Ausgangsspannungsberechnungseinheit (74) basierend auf einer Subtraktion des berechneten Werts des Stroms des anderen Arms von dem Messwert des Stroms des Wechselstromsensors (6ac) berechnet wird,
wobei die Gleichstrom-Steuerspannung dazu ausgestaltet ist, einen Gleichstrom zu steuern, der durch den Zweig (4Lu) fließt, der durch die Ausgangsspannungsberechnungseinheit (74) basierend auf einem Durchschnittswert des berechneten Werts des Stroms des anderen Arms und des Messwerts des Stroms des Wechselstromsensors berechnet wird,
wobei die Ausgleichssteuerspannung dazu ausgestaltet ist, einen Ausgleich unter den Energieakkumulationselementen (41) von den mehreren Einheitswandlern (4) von sowohl dem Arm (4Pu) auf der positiven Seite als auch dem Arm (4Nu) auf der negativen Seite zu steuern, der durch die Ausgangsspannungsberechnungseinheit (74) basierend auf einem Durchschnittswert des berechneten Werts des Stroms des anderen Arms und des Messwerts des Stroms des Wechselstromsensors berechnet wird, und
eine Steuereinheit (76), die dazu ausgestaltet ist, das EIN- und AUSSchalten jedes Einheitswandlers von den mehreren Einheitswandlern von sowohl dem Arm (4Pu) auf der positiven Seite als auch dem Arm (4Nu) auf der negativen Seite basierend auf der Ausgangsspannung und Ausgang eines Gate-Signals an jeden Einheitswandler von den mehreren Einheitswandlern (4) von sowohl dem Arm (4Pu) auf der positiven Seite als auch dem Arm (4Nu) auf der negativen Seite zu bestimmen, und
eine Gate-Signal-Schnittstelle (77), die dazu ausgestaltet ist, das Gate-Signal an jeden Einheitswandler von den mehreren Einheitswandlern (4) von sowohl dem Arm (4Pu) auf der positiven Seite als auch dem Arm (4Nu) auf der negativen Seite in Übereinstimmung mit der Steuereinheit (76) zu senden.

2. Stromwandlungsvorrichtung (1) nach Anspruch 1, wobei:
entsprechende Pufferreaktoren (51) des Arms auf der positiven Seite und des Arms auf der negativen Seite zwischen dem Arm auf der positiven Seite und dem Arm auf der negativen Seite in Reihe geschaltet sind;
die Wechselstrom bahn einen Wechselstromanschluss (11) umfasst und sich zur Wechselstromschaltung (9) von zwischen den entsprechenden Pufferreaktoren erstreckt; und
der Wechselstromsensor am Wechselstromanschluss bereitgestellt ist und dazu ausgestaltet ist, einen Strom durch den Wechselstromanschluss zu detektieren.

3. Stromwandlungsvorrichtung (1) nach Anspruch 1, wobei die Wechselstromschaltung dazu ausgestaltet ist, drei Phasen zu erzeugen und die Stromwandlungsvorrichtung ferner einen Dreiwicklungstransformator (52) für jede Phase umfasst, wobei die Dreiwicklungstransformatoren (52) der drei Phasen in einer Sternschaltung verbunden sind, wobei die Stromwandlungsvorrichtung für jede Phase einen entsprechenden Arm auf der positiven Seite und Arm auf der negativen Seite umfasst,
wobei jeder der Dreiwicklungstransformatoren (52) Folgendes umfasst:
eine Wicklung auf der Seite der Wechselstromschaltung, die mit der Wechselstromschaltung verbunden ist;
eine Wicklung auf der ersten Seite der Gleichstromschaltung und eine Wicklung auf der zweiten Seite der Gleichstromschaltung, die zwischen dem entsprechenden Arm auf der positiven Seite und Arm auf der negativen Seite in Reihe geschaltet sind; und
eine Neutralleitung (12), die sich von zwischen der Wicklung auf der ersten Seite der Gleichstromschaltung und der Wicklung auf der zweiten Seite der Gleichstromschaltung zu einem zweiten Ende erstreckt;
wobei die zweiten Enden der Neutralleitungen der Dreiwicklungstransformatoren (52) der drei Phasen miteinander verbunden sind,
die Wechselstrom bahn die Neutralleitung des Dreiwicklungstransformators der ersten Phase ist, und
der Wechselstromsensor an der Neutralleitung bereitgestellt ist und dazu ausgestaltet ist, einen Strom der Neutralleitung zu detektieren.

4. Stromwandlungsvorrichtung (1) nach Anspruch 1, wobei die Wechselstromschaltung dazu ausgestaltet ist, drei Phasen zu erzeugen und die Stromwandlungsvorrichtung ferner ein Paar Dreiwicklungstransformatoren (52a, 52d; 52c, 52f; 52e, 52b) für jede Phase umfasst, wobei die Dreiwicklungstransformatoren (52a, 52b, 52c, 52d, 52e, 52f) der drei Phasen in einer Deltaschaltung verbunden sind, wobei die Stromwandlungsvorrichtung für jede Phase einen entsprechenden Arm auf der positiven Seite und Arm auf der negativen Seite umfasst,
wobei jedes Paar von Dreiwicklungstransformatoren Folgendes umfasst:
zwei Wicklungen auf der Seite der Wechselstromschaltung, die mit einer entsprechenden von den Phasen der Wechselstromschaltung und parallel miteinander verbunden sind;
zwei Mengen der Wicklung auf der ersten Seite der Gleichstromschaltung und Wicklung auf der zweiten Seite der Gleichstromschaltung, die jeweils zwischen einem entsprechenden unterschiedlichen Arm auf der positiven Seite und Arm auf der negativen Seite verbunden sind und den zwei Wicklungen auf der Seite der Wechselstromschaltung entsprechen; und
wobei die Wechselstrombahn (13a) den Verbindungspunkt der Wicklung auf der ersten Seite der Gleichstromschaltung und der Wicklung auf der zweiten Seite der Gleichstromschaltung der zwei Mengen des Paares von Dreiwicklungstransformatoren (52a, 52d) der ersten Phase verbindet.

5. Stromwandlungsvorrichtung (1) nach einem der Ansprüche 1 bis 4, wobei die Wechselstromschaltung (9) mittels eines Transformators (3) an die Stromwandlungsvorrichtung (1) gekoppelt ist.

## Revendications

1. Dispositif de conversion de puissance (1) prévu entre un circuit CC et un circuit CA (9), le circuit CC comprenant une ligne CC côté positif (8P) et une ligne CC côté négatif (8N), et le dispositif de conversion de puissance comprenant :
une branche côté positif (4Pu) et une branche côté négatif (4Nu) comprenant chacune une pluralité de convertisseurs d'unité reliés en série, la branche côté positif et la branche côté négatif étant reliées en série entre la ligne CC côté positif (8P) et la ligne CC côté négatif (8N) ;
chaque convertisseur d'unité (4) parmi la pluralité de convertisseurs d'unité de la branche côté positif et de la branche côté négatif incluant un élément de commutation (42) relié entre une entrée et une sortie dudit convertisseur d'unité et un élément d'accumulation d'énergie (41) couplé entre l'entrée et la sortie dudit convertisseur d'unité (4),
un chemin de courant CA s'étendant depuis un point de liaison de la branche côté positif et de la branche côté négatif ;
un capteur de courant de branche (6arm) prévu uniquement dans une branche parmi la branche côté positif et la branche côté négatif, et configuré pour détecter un courant de ladite branche ; et
un capteur de courant CA (6ac) prévu sur le chemin de courant CA et configuré pour détecter un courant du chemin de courant CA ;
le dispositif de conversion de puissance comprenant en outre une unité de gestion configurée pour commander la pluralité de convertisseurs d'unité de la branche côté positif (4Pu) et de la branche côté négatif (4Nu) de manière à supprimer une composante CC dans le chemin de courant CA sur la base d'une valeur mesurée du courant détecté par le capteur de courant CA,
dans lequel l'unité de gestion (7) comprend :
une interface de valeur mesurée (71) reliée au capteur de courant CA (6ac) et au capteur de courant de branche (6arm) via des lignes de signal, et configurée pour recevoir la valeur mesurée du courant détecté par le capteur de courant CA (6ac) et une valeur mesurée du courant détecté par le capteur de courant de branche (6arm) ;
une unité de détection (72) configurée pour détecter une composante CC à partir de la valeur mesurée du capteur de courant CA ;
une unité de calcul (73) configurée pour calculer une tension de correction qui rend la composante CC nulle ;
une unité de calcul de courant de branche (75) configurée pour calculer un courant de l'autre branche parmi la branche côté positif et la branche côté négatif dans laquelle aucun capteur de courant de branche n'est installé par la soustraction de la valeur mesurée du capteur de courant CA à la valeur mesurée du capteur de courant de branche ;
une unité de calcul de tension de sortie (74) configurée pour calculer une tension de sortie par l'addition de la tension de correction, d'une tension de commande CA, d'une tension de commande CC et d'une tension de commande d'équilibre,
dans lequel la tension de commande CA est configurée pour commander un courant CA s'écoulant à travers un tronçon (4Lu) comprenant la branche côté positif (4Pu) et la branche côté négatif (4Nu), étant calculée par l'unité de calcul de tension de sortie (74) sur la base d'une soustraction de la valeur calculée du courant de l'autre branche à la valeur mesurée du courant du capteur de courant CA (6ac),
dans lequel la tension de commande CC est configurée pour commander un courant CC s'écoulant à travers le tronçon (4Lu), étant calculée par l'unité de calcul de tension de sortie (74) sur la base d'une valeur moyenne de la valeur calculée du courant de l'autre branche et de la valeur mesurée du courant du capteur de courant CA,
dans lequel la tension de commande d'équilibre est configurée pour commander un équilibre parmi les éléments d'accumulation d'énergie (41) de la pluralité de convertisseurs d'unité (4) de la branche côté positif (4Pu) et la branche côté négatif (4Nu), étant calculée par l'unité de calcul de tension de sortie (74) sur la base d'une valeur moyenne de la valeur calculée du courant de l'autre branche et de la valeur mesurée du courant du capteur de courant CA, et
une unité de commande (76) configurée pour déterminer l'activation et la désactivation de chaque convertisseur d'unité parmi la pluralité de convertisseurs d'unité de la branche côté positif (4Pu) et la branche côté négatif (4Nu) sur la base de la tension de sortie et délivrer un signal de grille à chaque convertisseur d'unité parmi la pluralité de convertisseurs d'unité (4) de la branche côté positif (4Pu) et la branche côté négatif (4Nu), et
une interface de signal de grille (77) configurée pour transmettre le signal de grille à chaque convertisseur d'unité parmi la pluralité de convertisseurs d'unité (4) de la branche côté positif (4Pu) et la branche côté négatif (4Nu) selon l'unité de commande (76).

2. Dispositif de conversion de puissance (1) selon la revendication 1, dans lequel :
des réactances tampons (51) respectives de la branche côté positif et la branche côté négatif sont reliées en série entre la branche côté positif et la branche côté négatif ;
le chemin de courant CA comprend une borne CA (11) et s'étend jusqu'au circuit CA (9) depuis entre les réactances tampons respectives ; et
le capteur de courant CA est prévu au niveau de la borne CA, et est configuré pour détecter un courant à travers la borne CA.

3. Dispositif de conversion de puissance (1) selon la revendication 1, dans lequel le circuit CA est configuré pour générer trois phases et le dispositif de conversion de puissance comprend en outre un transformateur à trois enroulements (52) pour chaque phase, les transformateurs à trois enroulements (52) des trois phases étant reliés dans une liaison en étoile, dans lequel le dispositif de conversion de puissance comprend, pour chaque phase, une branche côté positif et une branche côté négatif respectives,
dans lequel chacun des transformateurs à trois enroulements (52) comprend :
un enroulement côté circuit CA relié au circuit CA ;
un premier enroulement côté circuit CC et un deuxième enroulement côté circuit CC reliés en série entre la branche côté positif et la branche côté négatif respectives ; et
une ligne neutre (12) s'étendant depuis entre le premier enroulement côté circuit CC et le deuxième enroulement côté circuit CC jusqu'à une deuxième extrémité ;
dans lequel les deuxièmes extrémités des lignes neutres des transformateurs à trois enroulements (52) des trois phases sont reliées les unes aux autres,
le chemin de courant CA est la ligne neutre du transformateur à trois enroulements de la première phase, et
le capteur de courant CA est prévu au niveau de la ligne neutre et est configuré pour détecter un courant de la ligne neutre.

4. Dispositif de conversion de puissance (1) selon la revendication 1, dans lequel le circuit CA est configuré pour générer trois phases et le dispositif de conversion de puissance comprend en outre une paire de transformateurs à trois enroulements (52a, 52d ; 52c, 52f ; 52e, 52b) pour chaque phase, les transformateurs à trois enroulements (52a, 52b, 52c, 52d, 52e, 52f) des trois phases étant reliés dans une liaison en triangle, dans lequel le dispositif de conversion de puissance comprend, pour chaque phase, une branche côté positif et une branche côté négatif respectives,
dans lequel chaque paire de transformateurs à trois enroulements comprend :
deux enroulements côté circuit CA reliés à l'une respective des phases du circuit CA et en parallèle l'un à l'autre ;
deux ensembles d'un premier enroulement côté circuit CC et d'un deuxième enroulement côté circuit CC reliés chacun en série entre une branche côté positif et une branche côté négatif différentes respectives, et correspondant aux deux enroulements côté circuit CA ; et
dans lequel le chemin de courant CA (13a) relie le point de liaison du premier enroulement côté circuit CC et du deuxième enroulement côté circuit CC des deux ensembles de la paire de transformateurs à trois enroulements (52a, 52d) de la première phase.

5. Dispositif de conversion de puissance (1) selon l'une quelconque des revendications 1 à 4, dans lequel le circuit CA (9) est couplé au dispositif de conversion de puissance (1) au moyen d'un transformateur (3).
